# EUROPÄISCHE PATENTSCHRIFT

(11) **EP 1 354 794 B1**
(45) Veröffentlichungstag und Bekanntmachung des Hinweises auf die Patenterteilung: **19.04.2006**
(21) Anmeldenummer: 03008232.5
(22) Anmeldetag: 09.04.2003
(51) Int. Cl.: B64D 11/02, F02C 6/10, B64D 41/00, H01M 8/04

(54) **Anordnung zur Erzeugung von Wasser an Bord eines Luftfahrzeuges**
Apparatus for obtaining water onboard an aircraft
Appareil d'obtention d'eau à bord d'un avion

(30) Priorität: 16.04.2002 DE 10216710
(43) Veröffentlichungstag der Anmeldung: 22.10.2003
(73) Patentinhaber: Airbus Deutschland GmbH, 21129 Hamburg (DE)
(72) Erfinder: Hoffjann, Claus, 21629 Neu-Wulmstorf (DE); Heinrich, Hans-Jürgen, 22609 Hamburg (DE)
(74) Vertreter: Maiwald Patentanwalts GmbH

(56) Entgegenhaltungen:
- EP-A- 0 400 701
- EP-A- 0 634 563
- EP-A- 0 967 676
- EP-A- 1 035 016
- US-B1- 6 296 957
- PATENT ABSTRACTS OF JAPAN vol. 1999, no. 12, 29. Oktober 1999 (1999-10-29) & JP 11 200888 A (MITSUBISHI HEAVY IND LTD), 27. Juli 1999 (1999-07-27)

## Beschreibung

Die Erfindung betrifft ein Strahltrieswerk mit einer Anordnung zur Erzeugung von Wasser an Bord eines Luftfahrzeuges unter Verwendung von einer oder mehreren Brennstoffzellen.

Speziell in Luftfahrzeugen aber auch an Bord von Wasser- oder Landfahrzeugen sowie bel autonomen stationären Einrichtungen lässt sich Wasser z. B, durch den Einsatz von Brennstoffzellen oder durch einen anderen geeigneten Prozess gewinnen. Um hierbei die der Flug- und Betriebssicherheit sowie dem Komfort eines Luftfahrzeuges dienenden Redundanzen zu gewährleisten, müssen die einzelnen Systeme entsprechend miteinander verschaltet sein. Die bisher übliche Trennung zwischen Wasser - bzw. Abwassersystemen einerseits. Klima- bzw. Kabinenluftsystemen. Energieerzeugungssystemen sowie Hydraulik- bzw. Pneumatiksystemen anderseits ist durch den Einsatz von Brennstoffzellen nicht sinnvoll und vorteilhaft.

EP-A-0 967 676 beschreibt ein Strahl-Triebwerk, welches Brennstoffzellen aufweist. Hierbei sind die Brennstoffzellen an den Brennkammern angeordnet. Bei dem in EP-A-0 967 676 offenbarten Triebwerk wird der Prozess des Triebwerkes zum Betrieb der Brennstoffzelle benutzt.

US-B-6 296 957 beschreibt eine Energieversorgungseinrichtung an Bord von Flugzeugen, welche eine Brennstoffzelle zur Energieumwandlung zur Erzeugung elektrischer Energie für den Bordbetrieb umfasst.

Der Erfindung liegt die Aufgabe zugrunde, eine Anordnung der eingangs genannten Art zu schaffen, die eine optimale Ausnutzung der Brennstoffzellentechnologie und entsprechende Redundanzen für das Flugzeug gewährteistet sowie den geforderten Sicherheitsaspekten Rechnung trägt.

Die Aufgabe wird erfindungsgemäß durch die Merkmale des Anspruchs 1 gelöst.

Erfindungsgemäße Ausgestaltungen der Anordnung sind in den Unterensprüchen 2 bis 31 beschrieben.

Der Hauptvorteil der Erfindung liegt neben den aus der bordelgenen Wassererzeugung bekannten Vorteilen in Bezug auf Gewicht, Flexibilität, Wasserqualität und Wassermenge sowie Abwassermengenreduzierung, insbesondere in einem deutlich verminderten Schadstoffausstoß des Triebwerkes durch die höhere Effizienz des mit einem Gasturbinenprozess verbundenen Hochtemperatur-Brennstoffzellenprozesses sowie der damit verbundenen Reduzierung des Kraftstoffverbrauchs und der Nutzung des Brennstoffzellen-Abgases zur Wassergeneration. Im Idealfall wird lediglich CO₂ und Wasserdampf als Abgas ausgestossen.
Ein weiterer Vorteil besteht darin, dass durch die teilweise Nutzung des im Brennstoffzellen-Abgas enthaltenen Wassers, die Bildung von Kondensstreifen und die damit verbundene typische Schlierenbewölkung in hohen Atmosphäreschichten vermindert wird. Bezogen auf die Gesamtzahl der täglichen Flugbewegungen und durch die zusätzliche Verminderung des Ausstoßes von Kondensationskeimen durch unvollständige Verbrennungsprozesse ergibt sich hier eine nennenswerte Verminderung von Kondensatbildung in der Atmosphäre durch Flugzeugabgase.

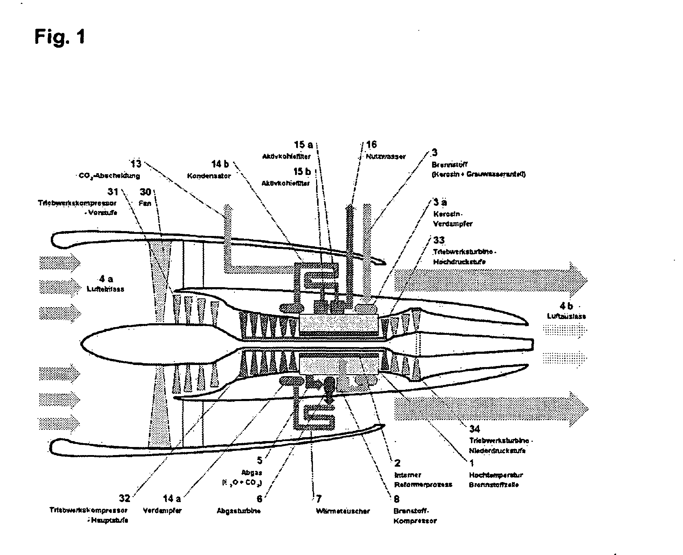

In der Zeichnung ist ein Ausführungsbeispiel nach der Erfindung dargestellt, und zwar zeigt die einzige Figur eine Anordnung zur Wassergenerierung durch eine in ein Triebwerk integrierte Hochtemperatur-Brennstoffzelle. Diese Anordnung wird nach einem aus gängigen Flugzeugtriebwerken bekannten Prozess betrieben. Luft wird angesaugt, über Kompressorstufen verdichtet, in Brennkammern (herkömmlich mit Treibstoff versetzt und gezündet) erhitzt und über Turbinenstufen, die ihrerseits mit den Kompressorstufen gekoppelt sind, ausgestoßen. Die dabei entstehende Rotationsenergie der Kompressor-Turbineneinheit wird auf einen sogenannten Fan übertragen, welcher den Hauptanteil des Schubes eines Triebwerks liefert.

Erfindungsgemäß wird der in den Brennkammem herkömmlicher Art stattfindende Prozess durch den Einsatz von einer oder mehreren Hochtemperatur-Brennstoffzellen ergänzt bzw. ganz abgelöst.
Das Prinzip von Hochtemperaturbrennstoffzellen ist für sogenannte SOFCs (Solld Oxide Fuel Cells - Oxidkeramik-Brennstoffzellen) und MCFCs (Molten Carbonate Fuel Cells - Schmelzkarbonat Brennstoffzellen) beschrieben worden. Zukünftig verfügbare andere Verfahren sind grundsätzlich ebenfalls einsetzbar.
Bel dem vorliegenden Verfahren sind prinzipbedingt die Luftseite d. h. der Sauerstofflieferant der Brennstoffzelle und die Brennstoffseite d. h. der Wasserstofflieferant der Brennstoffzelle voneinander getrennt.
Die Luft durchströmt das Triebwerk in Schubrichtung, wird verdichtet und in die Hochtemperatur-Brennstoffzelle geleitet. Hier wird sie durch den Oxidationsprozess erhitzt, der Sauerstoffanteil wird, soweit von der Brennstoffzelle benötigt, entzogen. Schließlich wird die so erhitzte Luft in der Turbine des Triebwerkes wieder entspannt. Die enthaltene Energie wird In den verschiedenen Turbinenstufen In Rotationsenergie umgewandelt und an die Kompressorstufen und den Fan des Triebwerkes abgegeben um neue Luft anzusaugen bzw. Schubarbeit zu verrichten.
Der Brennstoff, gängigerweise Kerosin, wird zunächst mit einem Grauwasseranteil emulgiert und dann über einen Verdampfer in die Brennstoffzelle geleitet. Der interne Reformerprozess spaltet den für den Betrieb der Brennstoffzelle nötigen Wasserstoff aus dem Brennstoff ab und oxidiert zu Wasser, welches in der Brennstoffzelle dann als Wasserdampf vorliegt. Die im Brennstoff enthaltenen Kohlenstoffanteile oxidieren zu CO₂ welches dem Abgas an geeigneter Stelle d. h. nach der ersten und/oder zweiten Kondensationsstufe entzogen wird.
Der so erzeugte Wasserdampf wird teilweise in den Turbinenteil abgeleitet um den in ihm enthaltenen Energieanteil in Rotationsenergie umzuwandeln und zu einem geringeren Teil in einem Wärmetauscher zu Wasser auskondensiert.
Zur Aussonderung noch eventuell vorhandener Schadstoffe im Wasser, wird dieses zunächst Ober einen Verdampfer/Kondensator-Prozess emeut destilliert und dann über Aktivkohlefilter nachbehandelt.
Der Verdampfer wird mit der Prozesswärme der Brennstoffzelle betrieben. Ebenso werden die Aktivkohlefilter mit der Prozesswärme der Brennstoffzelle in einem Temperaturniveau betrieben, welches Verkeimung der Filter ausschließt. Zur Regeneration der Aktivkohle werden die Filter Jeweils wechselseitig mit Brennstoffzellen-Prozesswärme regeneriert. Nach der Aktivkohlefiltration erfolgt eine emeute Kondensation und Absenkung des Temperaturniveaus des Wassers.

## Patentansprüche

1. Strahltriebwerk welches ausgestaltet ist zur Erzeugung von Wasser an Bord eines Luftfahrzeuges unter Verwendung von einer oder mehreren Brennstoffzellen;
das Strahltriebwerk umfassend:
eine Turbine (33, 34);
Abscheidemittel (7);
eine Wassererzeugungseinheit in Form von einer oder mehreren
Hochtemperatur-Brennstoffzellen (1);
wobei eine teilweise oder vollständige Integration der Wassererzeugungseinheit in das Strahltriebwerk derart vorgesehen ist, dass Brennkammern des Strahltriebwerks ganz oder teilweise durch die Hochtemperatur-Brennstoffzellen (1) ersetzt werden und somit der in den Brennkammern herkömmlicher Art stattfindende Prozess ergänzt oder ganz abgelöst wird;
wobei eine Hochtemperatur-Brennstoffzelle (1) zum ganzen oder teilweisen Ersetzen einer ersten Brennkammer derart ausgeführt ist, dass eine das Flugzeugtriebwerk durchströmende Luft in die Hochtemperatur-Brennstoffzelle (1) einleitbar ist, durch einen Oxidationsprozess in der Hochtemperatur-Brennstoffzelle (1) erhitzbar ist, und die in der erhitzten Luft gespeicherte Energie dann in der Turbine (33, 34) in Rotationsenergie umwandelbar ist; und
wobei der Hochtemperatur-Brennstoffzelle (1) die Abscheidemittel (7) nachgeschaltet sind, durch welche Wasser aus den Abgasen der Hochtemperatur-Brennstoffzelle (1) auskondensierbar ist.

2. Strahltriebwerk nach Anspruch 1, **dadurch gekennzeichnet, dass** die Hochtemperatur-Brennstoffzellen vom Typ Oxidkeramik-Brennstoffzelle oder Schmelzkarbonat-Brennstoffzelle ausgeführt sind.

3. Strahltriebwerk nach Anspruch 1 oder 2, **dadurch gekennzeichnet, dass** der Hochtemperatur-Brennstoffzelle (1) eine Abgasturbine (6) und ein Wärmetauscher (7) nachgeschaltet sind, durch welche Wasser aus den Abgasen der Brennstoffzelle auskondensierbar ist.

4. Strahltriebwerk nach Anspruch 1, **dadurch gekennzeichnet, dass** Kompressoren (8, 32) vorgesehen sind, über die Brennstoffzellen beidseitig auf der Luft- bzw. Sauerstoffseite einerseits und auf der Brennstoff- bzw. Wasserstoffseite andererseits mit Druck beaufschlagbar sind.

5. Strahltriebwerk nach Anspruch 1, **dadurch gekennzeichnet, dass** eine Einrichtung vorgesehen ist, über welche der Brennstoffzelle ein Gemisch oder eine Emulsion aus Brennstoff und Grauwasser zuführbar ist.

6. Strahltriebwerk nach Anspruch 1 oder 5, **dadurch gekennzeichnet, dass** zur Verdampfung des Brennstoffgemisches (3) ein Verdampfer (3 a) vorgesehen ist, dem ein Reformer (2) für einen internen Reformerprozess der Brennstoffzelle (1) nachgeordnet ist.

7. Strahltriebwerk nach Anspruch 1 oder 6, **dadurch gekennzeichnet, dass** der Verdampfer (3 a) mit der Brennstoffzelle (1) thermisch verbunden ist, so dass er mit einer Prozesswärme der Brennstoffzelle (1) betreibbar ist.

8. Strahltriebwerk nach Anspruch 6 oder 7, **dadurch gekennzeichnet, dass** der Verdampfer (3 a) ringförmig um die Brennstoffzelle (1) angeordnet ist.

9. Strahltriebwerk nach Anspruch 6, 7 oder 8, **dadurch gekennzeichnet, dass** dem Verdampfer (3 a) ein Kompressor (8) nachgeschaltet ist.

10. Strahltriebwerk nach Anspruch 4 oder 9, **dadurch gekennzeichnet, dass** der Kompressor (8) über eine Abgasturbine (6) antreibbar ausgeführt ist.

11. Strahltriebwerk nach Anspruch 3 oder 10, **dadurch gekennzeichnet, dass** die Abgasturbine (6) mit dem Abgas (5) der Brennstoffzelle (1) betreibbar ausgeführt ist.

12. Strahltriebwerk nach Anspruch 3, 10 oder 11, **dadurch gekennzeichnet, dass** die Abgasturbine (6) eine Stufe des Kondensationsprozesses bildet.

13. Strahltriebwerk nach Anspruch 9, 10 oder 11, **dadurch gekennzeichnet, dass** die Abgasturbine (6) und der Kompressor (8) einfach oder mehrfach vorhanden ist.

14. Strahltriebwerk nach Anspruch 13, **dadurch gekennzeichnet, dass** bei mehrfacher Anordnung der Kompressoren (8) neben den Brennstoff-Kompressoren auch Kompressoren für Druckluft und Hydraulik vorgesehen sind.

15. Strahltriebwerk nach Anspruch 3, **dadurch gekennzeichnet, dass** eine Stufe des Kondensationsprozesses als ein Wärmetauscher (7) ausgeführt ist.

16. Strahltriebwerk nach Anspruch 3 oder 15, **dadurch gekennzeichnet, dass** der Wärmetauscher im Luftstrom des Triebwerkes und/oder im Luftstrom an der Triebwerks-Außenhaut angeordnet ist.

17. Strahltriebwerk nach Anspruch 3 oder 15, **dadurch gekennzeichnet, dass** der Abgasturbine (6) und dem Wärmetauscher (7) ein Verdampfer (14 a) oder Kondensator (14 b) zur Wasserpurifikation nachgeschaltet ist.

18. Strahltriebwerk nach Anspruch 17, **dadurch gekennzeichnet, dass** der Verdampfer (14 a) mit der Brennstoffzelle (1) thermisch verbunden ist, so dass er mit der Prozesswärme der Brennstoffzelle (1) betreibbar ist.

19. Strahltriebwerk nach Anspruch 17 oder 18, **dadurch gekennzeichnet, dass** der Verdampfer (14) ringförmig um die Brennstoffzelle (1) angeordnet ist.

20. Strahltriebwerk nach Anspruch 17, **dadurch gekennzeichnet, dass** der Kondensator (14 b) im Luftstrom des Triebwerkes und/oder im Luftstrom an der Triebwerks-Außenhaut betrieben wird.

21. Strahltriebwerk nach Anspruch 17, **dadurch gekennzeichnet, dass** hinter dem Wärmetauscher (7) und/oder dem Kondensator (14 b) ein CO₂-Ausscheider vorgesehen ist, über den dem Abgas (5) das CO₂ nach den Kondensationsprozessen des Wärmetauschers (7) und/oder des Kondensators (14 b) entzogen wird.

22. Strahltriebwerk nach Anspruch 17, **dadurch gekennzeichnet, dass** dem Verdampfer/Kondensator (14 a, 14 b) Aktivkohlefilter (15 a, 15 b) zur Aktivkohlefiltration nachgeschaltet sind.

23. Strahltriebwerk nach Anspruch 22, **dadurch gekennzeichnet, dass** die Aktivkohlefilter (15 a, 15 b) in der Nähe der Brennstoffzelle (1) angeordnet sind, so dass sie mit der Prozesswärme der Brennstoffzelle regenerierbar sind.

24. Strahltriebwerk nach Anspruch 23, **dadurch gekennzeichnet, dass** nach der Aktivkohlefiltration (15 a, 15 b) Abnahmeeinrichtung (16) vorgesehen ist, über welche den Aktivkohlefiltern (15 a, 15 b) Wasser in destillierter Qualität abnehmbar ist.

25. Strahltriebwerk nach Anspruch 24, wobei die Abnahmevorrichtung (16) derart ausgeführt ist, dass ein Teil des erzeugten Wassers dem erhitzten Luftstrom vor den Turbinenstufen des Triebwerkes (33, 34) zuführbar ist.

26. Strahltriebwerk nach Anspruch 1, **dadurch gekennzeichnet, dass** die Turbinenstufen des Triebwerkes die Kompressorstufen (31, 32) und den Fan (30) des Triebwerkes betreiben, wobei die Kompressorstufen (31, 32) die Brennstoffzelle luft- bzw. sauerstoffseitig mit Druck beaufschlagen und der Fan (30) im Wesentlichen den Schub erzeugt.

27. Strahltriebwerk nach Anspruch 1, **dadurch gekennzeichnet, dass** der Triebwerkskompressor (32) und die Triebwerksturbine (33) zur Luftversorgung und Kühlung der Brennstoffzelle (1) mit verminderter Drehzahl mitdrehen, während der Fan (30), die Triebwerkskompressor-Vorstufe und die Triebwerksturbinen-Niederdruckstufe (34) gebremst werden.

28. Strahltriebwerk nach einem der Ansprüche 1 bis 27, wobei das Strandtriebwerk ein Triebwerk ist, das mittels Druckluft startbar ist.

29. Strahltriebwerk nach Anspruch 29, **dadurch gekennzeichnet, dass** die Hochtemperatur-Brennstoffzellen vom Typ Oxidkeramik-Brennstoffzelle oder Schmelzkarbonat-Brennstoffzelle ausgeführt sind.

30. Strahltriebwerk nach Anspruch 29 oder 30, **dadurch gekennzeichnet, dass** der Hochtemperatur-Brennstoffzelle (1) eine Abgasturbine (6) und ein Wärmetauscher (7) nachgeschaltet sind, durch welche Wasser aus den Abgasen der Brennstoffzelle auskondensierbar ist.

31. Strahltriebwerk nach Anspruch 29, **dadurch gekennzeichnet, dass** Kompressoren (8, 32) vorgesehen sind, über die Brennstoffzellen beidseitig auf der Luft- bzw. Sauerstoffseite einerseits und auf der Brennstoff- bzw. Wasserstoffseite andererseits mit Druck beaufschlagbar sind.

## Claims

1. A jet engine that is designed to generate water on board an aircraft with the use of one or several fuel cells;
with the jet engine comprising:
a turbine (33, 34);
separation means (7);
a water generating unit in the form of one or several high-temperature fuel cells (1);
wherein partial or full integration of the water generating unit in the jet engine is provided such that combustion chambers of the jet engine are entirely or partially replaced by high-temperature fuel cells (1), and thus the process that takes place in combustion chambers of the conventional type is supplemented or entirely replaced;
wherein a high-temperature fuel cell (1) for entirely or partially replacing a first combustion chamber is designed in such a way that air that flows through the jet engine can be fed to the high-temperature fuel cell (1), can be heated by an oxidation process in the high-temperature fuel cell (1), and the energy stored in the heated air can then be converted to rotational energy in the turbine (33, 34); and
wherein the separation means are arranged downstream of the high-temperature fuel cell (1), by which separation means (7) water can be condensed out of the exhaust gases of the high-temperature fuel cell (1).

2. The jet engine of claim 1, wherein the high-temperature fuel cells are of the oxide ceramics fuel cell type or the molten carbonate fuel cell type.

3. The jet engine of claim 1 or 2, wherein an exhaust gas turbine (6) and a heat exchanger (7) are arranged downstream of the high-temperature fuel cell (1), by means of which exhaust gas turbine (6) and heat exchanger (7), water can be condensed out of the exhaust gases of the fuel cell.

4. The jet engine of claim 1, wherein compressors (8, 32) are provided by way of which the fuel cells can be impinged upon with pressure on the air side i.e. oxygen side on the one hand, and on the fuel side i.e. hydrogen side on the other hand.

5. The jet engine of claim 1, wherein a device is provided by way of which a mixture or an emulsion comprising fuel and grey water can be fed to the fuel cell.

6. The jet engine of claim 1 or 5, wherein for evaporating the fuel mix (3) an evaporator is provided, and downstream of said evaporator (3a) a reformer (2) for an internal reformer process of the fuel cell (1) is arranged.

7. The jet engine of claim 1 or 6, wherein the evaporator (3a) is thermally connected to the fuel cell (1) so that it can be operated with process heat from the fuel cell (1).

8. The jet engine of claim 6 or 7, wherein the evaporator (3a) is arranged in an annular shape around the fuel cell (1).

9. The jet engine of claim 6, 7 or 8, wherein a compressor (8) is arranged downstream of the evaporator (3a).

10. The jet engine of claim 4 or 9, wherein the compressor (8) is designed so that it can be driven by an exhaust gas turbine (6).

11. The jet engine of claim 3 or 10, wherein the exhaust gas turbine (6) is designed so that it can be operated with the exhaust gas (5) of the fuel cell (1).

12. The jet engine of claim 3, 10 or 11, wherein the exhaust gas turbine (6) forms a stage of the condensation process.

13. The jet engine of claim 9, 10 or 11, wherein the exhaust gas turbine (6) and the compressor (8) exists in single or multiple units.

14. The jet engine of claim 13, wherein in the case of multiple arrangement of the compressors (8), apart from the fuel compressors, compressors for compressed air and hydraulics are also provided.

15. The jet engine of claim 3, wherein a stage of the condensation process is designed as a heat exchanger (7).

16. The jet engine of claim 3 or 15, wherein the heat exchanger is arranged in the air stream of the engine and/or in the air stream at the outer skin of the engine.

17. The jet engine of claim 3 or 15, wherein for water purification an evaporator (14a) or condenser (14b) is arranged downstream of the exhaust gas turbine (6) and the heat exchanger (7).

18. The jet engine of claim 17, wherein the evaporator (14a) is thermally connected to the fuel cell (1) so that it can be operated with the process heat of the fuel cell (1).

19. The jet engine of claim 17 or 18, wherein the evaporator (14) is arranged in an annular shape around the fuel cell (1).

20. The jet engine of claim 17, wherein the condenser (14b) is arranged in the air stream of the engine and/or in the air stream at the outer skin of the engine.

21. The jet engine of claim 17, wherein a CO₂ separator is provided downstream of the heat exchanger (7) and/or the condenser (14b), by way of which CO₂ separator the CO₂ is removed from the exhaust gas (5) after the condensation processes of the heat exchanger (7) and/or of the condenser (14b).

22. The jet engine of claim 17, wherein activated carbon filters for activated carbon filtration (15a, 15b) are arranged downstream of the evaporator/condenser (14a, 14b).

23. The jet engine of claim 22, wherein the activated carbon filters (15a, 15b) are arranged near the fuel cell (1) so that they can be regenerated using the process heat of the fuel cell.

24. The jet engine of claim 23, wherein after activated carbon filtration (15a, 15b) a removal device (16) is provided, by way of which removal device water of distilled quality can be removed from the activated carbon filters (15a, 15b).

25. The jet engine of claim 24, wherein the removal device (16) is designed such that part of the generated water can be fed to the heated air stream upstream of the turbine stages of the engine (33, 34).

26. The jet engine of claim 1, wherein the turbine stages of the engine operate the compressor stages (31, 32) and the fan (30) of the engine, wherein the compressor stages (31, 32) impinge upon the fuel cell with pressure on the air side i.e. the oxygen side, while the fan (30) essentially generates the thrust.

27. The jet engine of claim 1, wherein the engine compressor (32) and the engine turbine (33) rotate as well, at reduced rotational speed, for supplying air and for cooling the fuel cell (1), while the fan (30), the preliminary stage of the engine compressor and the low-pressure stage (34) of the engine turbine are decelerated.

28. The jet engine of any one of claims 1 to 27, wherein the jet engine is an engine that can be started by means of compressed air.

29. The jet engine of claim 29, wherein the high-temperature fuel cells are of the oxide ceramics fuel cell type or the molten carbonate fuel cell type.

30. The jet engine of claim 29 or 30, wherein an exhaust gas turbine and a heat exchanger are arranged downstream of the high-temperature fuel cell (1), by means of which exhaust gas turbine (6) and heat exchanger (7) water can be condensed out of the exhaust gases of the fuel cell.

31. The jet engine of claim 29, wherein compressors (8, 32) are provided by way of which the fuel cells can be impinged upon with pressure on the air side i.e. oxygen side on the one hand, and on the fuel side i.e. hydrogen side on the other hand.

## Revendications

1. Réacteur, qui est conçu pour la production d'eau à bord d'un aéronef avec l'utilisation d'une ou de plusieurs cellules de combustible ;
le réacteur comprenant :
une turbine (33, 34) ;
des moyens de séparation (7) ;
une unité de production d'eau sous la forme d'une ou de plusieurs cellules de combustible à haute température (1) ;
une intégration partielle ou complète de l'unité de production d'eau dans le réacteur étant prévue de telle sorte que des chambres de combustion du réacteur soient remplacées totalement ou partiellement par les cellules de combustible à haute température (1) et que de ce fait le processus se produisant dans les chambres de combustion de type classique est complété ou complètement remplacé ;
une cellule de combustible à haute température (1) étant réalisée pour le remplacement complet ou partiel d'une première chambre de combustion de telle sorte qu'un air traversant le moteur d'avion peut être introduit dans la cellule de combustible à haute température (1), peut être chauffé par un processus d'oxydation dans la cellule de combustible à haute température (1), et l'énergie stockée dans l'air réchauffé peut être convertie ensuite dans la turbine (33, 34) en énergie de rotation; et
les moyens de séparation (7), par lesquels de l'eau peut être sortie par condensation des gaz d'échappement de la cellule de combustible à haute température (1), étant branchés en aval de la cellule de combustible à haute température (1).

2. Réacteur selon la revendication 1, **caractérisé en ce que** les cellules de combustible à haute température sont réalisées du type cellule de combustible en céramique oxydée ou cellule de combustible en carbonate de fusion.

3. Réacteur selon la revendication 1 ou 2, **caractérisé en ce qu'**une turbine à gaz d'échappement (6) et un échangeur de chaleur (7), par lesquels de l'eau peut être sortie par condensation des gaz d'échappement de la cellule de combustible, sont montés en aval de la cellule de combustible à haute température (1).

4. Réacteur selon la revendication 1, **caractérisé en ce que** des compresseurs (8, 32) sont prévus, par lesquels les cellules de combustible peuvent être alimentées en pression d'une part des deux côtés sur le côté air et le côté oxygène et d'autre part sur le côté combustible et le côté hydrogène.

5. Réacteur selon la revendication 1, **caractérisé en ce qu'**il est prévu un appareil par lequel un mélange ou une émulsion constituée de combustible et d'eau grise peut être amené à la cellule de combustible.

6. Réacteur selon la revendication 1 ou 5, **caractérisé en ce que**, pour l'évaporation du mélange de combustible (3), il est prévu un évaporateur (3a) en aval duquel est disposé un reformeur (2) pour un processus de reformage interne de la cellule de combustible (1).

7. Réacteur selon la revendication 1 ou 6, **caractérisé en ce que** l'évaporateur (3a) est relié thermiquement à la cellule de combustible (1), de sorte qu'il peut être exploité avec une chaleur de processus de la cellule de combustible (1).

8. Réacteur selon la revendication 6 ou 7, **caractérisé en ce que** l'évaporateur (3a) est disposé en anneau autour de la cellule de combustible (1).

9. Réacteur selon la revendication 6, 7 ou 8, **caractérisé en ce qu'**un compresseur (8) est branché en aval de l'évaporateur (3a).

10. Réacteur selon la revendication 4 ou 9, **caractérisé en ce que** le compresseur (8) est réalisé de façon à pouvoir être entraîné au moyen d'une turbine à gaz d'échappement (6).

11. Réacteur selon la revendication 3 ou 10, **caractérisé en ce que** la turbine à gaz d'échappement (6) est réalisée de façon à pouvoir être exploitée avec le gaz d'échappement (5) de la cellule de combustible (1).

12. Réacteur selon la revendication 3, 10 ou 11, **caractérisé en ce que** la turbine à gaz d'échappement (6) forme un étage du processus de condensation.

13. Réacteur selon la revendication 9, 10 ou 11, **caractérisé en ce que** la turbine à gaz d'échappement (6) et le compresseur (8) sont présents de façon unitaire ou multiple.

14. Réacteur selon la revendication 13, **caractérisé en ce que**, avec un agencement multiple des compresseurs (8), des compresseurs pour l'air comprimé et le système hydraulique sont prévus également à côté des compresseurs à combustible.

15. Réacteur selon la revendication 3, **caractérisé en ce qu'**un étage du processus de condensation est réalisé sous la forme d'un échangeur de chaleur (7).

16. Réacteur selon la revendication 3 ou 15, **caractérisé en ce que** l'échangeur de chaleur est disposé dans le flux d'air du réacteur et/ou dans le flux d'air sur l'enveloppe extérieure du moteur.

17. Réacteur selon la revendication 3 ou 15, **caractérisé en ce qu'**un évaporateur (14a) ou un condenseur (14b) pour la purification de l'eau est monté en aval de la turbine à gaz d'échappement (6) et de l'échangeur de chaleur (7).

18. Réacteur selon la revendication 17, **caractérisé en ce que** l'évaporateur (14a) est relié thermiquement à la cellule de combustible (1), de sorte qu'il peut être exploité avec la chaleur de processus de la cellule de combustible (1).

19. Réacteur selon la revendication 17 ou 18, **caractérisé en ce que** l'évaporateur (14) est disposé en anneau autour de la cellule de combustible (1).

20. Réacteur selon la revendication 17, **caractérisé en ce que** le condenseur (14b) est exploité dans le flux d'air du moteur et/ou dans le flux d'air sur l'enveloppe extérieure du moteur.

21. Réacteur selon la revendication 17, **caractérisé en ce que**, derrière l'échangeur de chaleur (7) et/ou le condenseur (14b), il est prévu un séparateur de CO₂, par lequel le CO₂ est extrait des gaz d'échappement (5) après les processus de condensation de l'échangeur de chaleur (7) et/ou du condenseur (14b).

22. Réacteur selon la revendication 17, **caractérisé en ce que** des filtres à charbon actif (15a, 15b) pour le filtrage au charbon actif sont montés en aval de l'évaporateur/condenseur (14a, 14b).

23. Réacteur selon la revendication 22, **caractérisé en ce que** les filtres à charbon actif (15a, 15b) sont disposés à proximité de la cellule de combustible (1), de sorte qu'ils peuvent être régénérés avec la chaleur de processus de la cellule de combustible.

24. Réacteur selon la revendication 23, **caractérisé en ce que**, après le filtrage au charbon actif (15a, 15b), il est prévu un dispositif de prélèvement (16) par lequel de l'eau peut être prélevée dans une qualité distillée sur les filtres à charbon actif (15a, 15b).

25. Réacteur selon la revendication 24, le dispositif de prélèvement (16) étant réalisé de telle sorte qu'une partie de l'eau générée peut être amenée au flux d'air réchauffé en amont des étages de turbine du moteur (33, 34).

26. Réacteur selon la revendication 1, **caractérisé en ce que** les étages de turbine du moteur entraînent les étages de compresseur (31, 32) et le ventilateur (30), les étages de compresseur (31, 32) alimentant la cellule de combustible en pression côté air ou côté oxygène et le ventilateur (30) générant pour l'essentiel la poussée.

27. Réacteur selon la revendication 1, **caractérisé en ce que** le compresseur du moteur (32) et la turbine du moteur (33) tournent conjointement à régime réduit pour l'alimentation en air et le refroidissement de la cellule de combustible (1), tandis que le ventilateur (30), l'étage préliminaire du compresseur du moteur et l'étage basse pression de la turbine du moteur (34) sont freinés.

28. Réacteur selon l'une quelconque des revendications 1 à 27, le réacteur étant un moteur qui peut être démarré au moyen d'air comprimé.

29. Réacteur selon la revendication 29, **caractérisé en ce que** les cellules de combustible à haute température sont réalisées du type cellule de combustible à céramique oxydée ou cellule de combustible à carbonate de fusion.

30. Réacteur selon la revendication 29 ou 30, **caractérisé en ce qu'**une turbine à gaz d'échappement (6) et un échangeur de chaleur (7), par lesquels de l'eau peut être évacuée par condensation des gaz d'échappement de la cellule de combustible, sont montés en aval de la cellule de combustible à haute température (1).

31. Réacteur selon la revendication 29, **caractérisé en ce qu'**il est prévu des compresseurs (8, 32) par lesquels des cellules de combustible peuvent être alimentées en pression des deux côtés d'une part sur le côté air et le côté oxygène et d'autre part sur le côté combustible et le côté hydrogène.
